# FASCICULE DE BREVET EUROPEEN

(11) **EP 2 480 558 B1**
(45) Date de publication et mention de la délivrance du brevet: **05.03.2014**
(21) Numéro de dépôt: 10749874.3
(22) Date de dépôt: 08.09.2010
(51) Int. Cl.: C07F 9/50, C07F 9/54, C02F 1/50, C02F 11/14, A01N 57/20, C02F 3/00

(54) **DERIVES ORGANOPHOSPHORES ET LEUR UTILISATION COMME AGENTS DECOUPLANTS.**
ORGANOPHOSPHORDERIVATE UND IHRE VERWENDUNG ALS ENTKOPPLER
ORGANOPHOSPHORUS DERIVATIVES AND USE THEREOF AS UNCOUPLING AGENTS

(30) Priorité: 22.09.2009 FR 0904510
(43) Date de publication de la demande: 01.08.2012
(73) Titulaire: Rhodia Opérations, 93306 Aubervilliers (FR)
(72) Inventeur: MARCHAL, Philippe, F-69230 SAINT GENIS LAVAL (FR); SCHANEN, Vincent, F-69006 Lyon (FR); CARRET-TRONCY, Stéphane, F-38540 GRENAY (FR); BERARD, Mickaël, F-69520 Grigny (FR); LOUVEL, Luc, F-69006 Lyon (FR); PILAS-BEGUE, Agnes, F-01700 Miribel (FR)
(74) Mandataire: Blot, Philippe Robert Emile
(86) Numéro de dépôt international: PCT/EP2010/063140
(87) Numéro de publication internationale: WO 2011/036052

(56) Documents cités:
- EP-A1- 0 380 359
- US-A- 2 937 207
- GRAYSON: J. AM. CHEM. SOC., vol. 85, 1963, pages 79-83, XP002582991,

## Description

L'invention concerne des dérivés organophosphoniums, leur procédé de préparation et leur utilisation comme agents découplants. L'invention concerne ces agents découplants en vue d'une utilisation dans le cadre de la régulation de la biomasse bactérienne dans les systèmes aqueux, en particulier en station d'épuration des eaux usées, ainsi que l'utilisation de ces agents et un procédé d'utilisation de ces agents.

L'activité découplante d'une molécule, consiste à agir sur l'énergétique cellulaire bactérienne de manière à réduire la production de biomasse des eaux usées tout en gardant l'activité épuratoire de la cellule bactérienne par dégradation biologique de molécules organiques. Les détails de la biochimie et des mécanismes impliqués dans la respiration des cellules sont exposés, par exemple, dans la publication « Biochemistry », 3ème édition, auteur : Lubert Stryer, éditeur : W. H. Freemen & Company, New York, Etats-Unis, 1998 et également dans la publication « General Microbiology », 3ème édition, auteurs : Roger Y. Stanier, Michael Doudoroff et Edward A. Adelberg, éditeur : Macmillan, 1971. L'activité découplante d'une molécule sur la croissance bactérienne s'exprime *in fine* par une surconsommation d'oxygène induite par un déséquilibre de l'énergétique bactérienne.

Cette activité découplante d'une molécule est intéressante pour une application en station d'épuration, dénommée par la suite en abrégé STEP, dans le cas où elle permet de réduire à la source la production de boues activées de manière significative.

La production de biomasse et donc de boues activées dans le traitement des eaux usées, a pour origine la consommation des nutriments dans les eaux usées. Par un procédé de respiration, les nutriments sont oxydés et ceci dégage de l'énergie qui peut être utilisée par les micro-organismes dans le cadre de la division cellulaire. Or, la consommation des nutriments induit un flux de protons au niveau de la membrane bactérienne par le phénomène de phosphorylation oxydative; ce flux va établir un gradient de protons qui lui-même fait tourner des pompes à protons qui permettent la synthèse d'ATP(Adénosine Triphosphate) à partir d'ADP+P . L'ATP fournit l'énergie à la cellule dans le cadre des processus cellulaires y compris la division cellulaire.

Si ce dégagement d'énergie pouvait être évité, cela conduirait à une diminution de génération de biomasse par inhibition de la production d'énergie. Le découplage correspond à l'inhibition de la formation de réserves énergétiques sous forme d'ATP. Un agent découplant diminue le rendement énergétique de la combustion du carbone tout en augmentant la proportion de carbone oxydé en CO₂. Le découplage se traduit donc par une moindre production de biomasse et une plus grande consommation d'oxygène.

La biomasse bactérienne produite au cours du traitement des eaux usées est coûteuse à éliminer et donc une diminution de la biomasse conduit à une réduction des coûts d'élimination.

Un but de la présente invention est de proposer des molécules découplantes dont l'efficacité est mesurée par une baisse de la production des boues biologiques à la source, c'est-à-dire dans les bassins d'aération des stations d'épuration urbaine, d'au moins 30 %.

Un autre but de la présente invention est de proposer des molécules découplantes dont l'efficacité est sensiblement équivalente ou même supérieure à une molécule de référence THPS (Tétrakis hydroxymethyl phosphonium) dont l'efficacité sur la réduction de production de boue biologique a été montrée dans la demande de brevet WO 2004/113236. EP0380359 A1 divulgue EBTC comme biocide.

Un autre but de la présente invention est de proposer des molécules découplantes alternatives au THPS dont la dégradabilité abiotique et biotique est moins rapide que celle du THPS sans toutefois que lesdites molécules soient non dégradables ce qui poserait des problèmes d'environnement.

Enfin, un autre but de la présente invention est de proposer des molécules découplantes dont le profil toxicologique et écotoxicologique est satisfaisant et adéquate à l'usage de celles-ci en STEP.

Ces buts et d'autres sont atteints par la présente invention qui concerne en effet un dérivé organophosphonium de formule générale moyenne (1) : 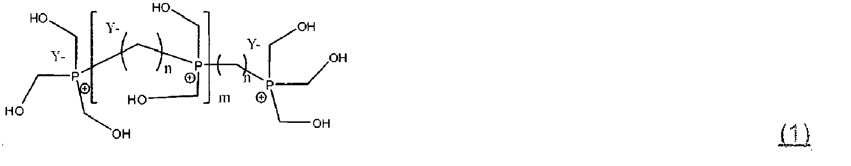 dans laquelle:
n est un nombre compris entre 4 et 20 de préférence entre 5 et 10,
m est un nombre compris entre 0 et 10 de préférence entre 0 et 1, et
Y est un anion, de préférence chlorure, sulfate, phosphate, ou bromure.

Pour les composés préférés de l'invention, n est compris entre 5 et 10,
m est 0 ou 1, et Y est un anion chlorure, sulfate, phosphate, ou bromure.

Pour les composés encore plus préférés de l'invention, n est 8 et
m est 0 ou 1.

La présente invention concerne également un procédé de préparation d'un dérivé organophosphonium tel que défini ci-dessus, comprenant les étapes suivantes :
a) on fait réagir du chlorure de tetrakis(hydromethyl)phosphonium sur une base forte comme la soude, sous atmosphère inerte en vue d'obtenir de la trishydroxyméthyl phosphine avec élimination de formaldéhyde suivant le schéma réactionnel ci-dessous : 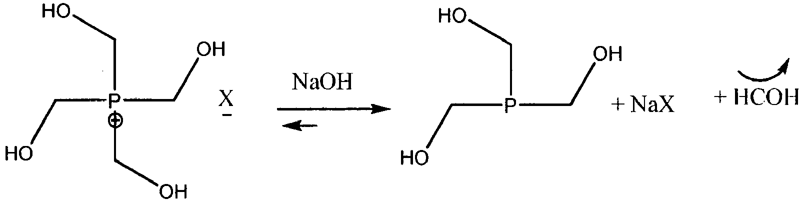 dans lequel x représente un anion ;
b) sur la masse réactionnelle obtenue à l'exemple a), on fait réagir un alpha,oméga dihalogéno alkylène et l'on obtient le diphosphonium alkylène correspondant 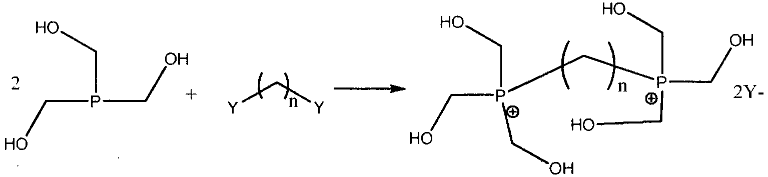
c) éventuellement le diphosphonium alkylène obtenu à l'étape b) réagit sur un excès de dihalogéno alkylène et de trishydroxyméthyl phosphine pour donner un tri ou polyphosphonium avec dégagement de formaldehyde selon le schéma réactionnel ci-dessus : 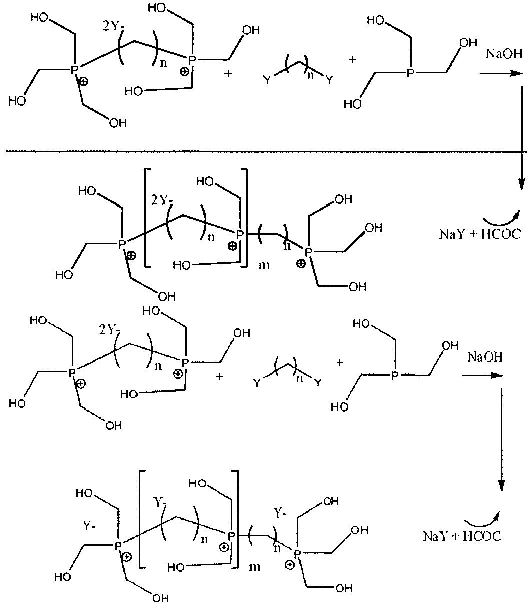
X, Y, n et m ayant la signification donnée à la formule (1) ci-dessus.

La présente invention vise également un procédé pour réguler la croissance de la biomasse bactérienne dans un système aqueux comprenant l'addition au système aqueux, ou la mise en contact avec le système aqueux, d'une quantité efficace d'un agent découplant choisi parmi un dérivé organophosphonium de formule générale moyenne (1): 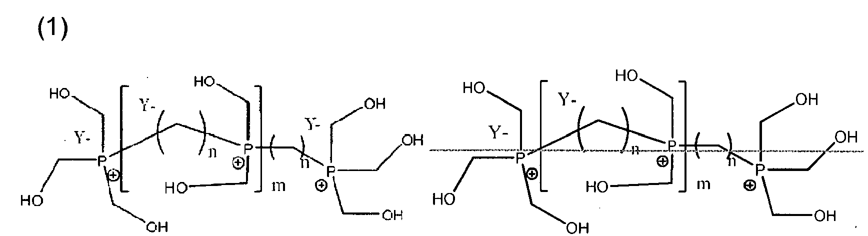 Dans laquelle:
n est un nombre compris entre 4 et 20 de préférence entre 5 et 10,
m est un nombre compris entre 0 et 10 de préférence entre 0 et 1, et
Y est un anion de préférence choisi parmi le groupe constitué par les ions chlorure, sulfate, phosphate, acétate et bromure.

De façon encore plus préférée, n est 8 et m est 0 ou 1.

L'invention vise également un procédé pour réguler la croissance de la biomasse bactérienne dans un système aqueux comprenant l'addition au système aqueux, ou la mise en contact avec le système aqueux, d'une quantité efficace d'un agent découplant choisi parmi un dérivé organophosphonium tel que défini ci-dessus. La quantité efficace de dérivé organophosphonium ajoutée au système aqueux peut représenter jusqu'à 100 mg/l, par exemple jusqu'à 50 mg/l, telle que jusqu'à 30 mg/l. De préférence, la quantité efficace de dérivé organophosphonium ajoutée au système aqueux représente de 0, 0001 mg/l à 100 mg/l, de 0,005 mg/l à 50 mg/l, par exemple de 0,01 mg/l à 30 mg/l, telle que de 0,05 mg/l à 10 mg/l. Plus préférablement, la quantité efficace de dérivé organophosphonium représente de 0,1 à 10 mg/l, par exemple de 0,5 mg/l à 7,5 mg/l, telle que de 1 à 5 mg/l.

Le dérivé organophosphonium dans l'application agent découplant peut être formulé avec un ou plusieurs des produits chimiques suivants conventionnellement utilisés dans le traitement des eaux usées :
un tensioactif ;
un agent antimousse ;
un inhibiteur d'entartrage ;
un inhibiteur de corrosion ;
un biocide ;
un floculant ;
un agent facilitant la séparation solides/eau ; et
un dispersant.

De préférence, le système aqueux sera une usine de traitement des eaux usées qui est utilisée pour le traitement des effluents industriels ou municipaux. Cette installation récupère les eaux usées des procédés industriels (par exemple, la production de papier, l'industrie alimentaire, l'industrie chimique) et/ou des habitations domestiques et des bâtiments institutionnels et des installations similaires, en utilisant des micro-organismes dans des procédés aérobies, anoxiques (par exemple la dénitrification), pour consommer les polluants organiques et rendre l'eau adaptée en vue d'une réutilisation ou d'un rejet dans l'environnement.

La présente invention fournit donc un procédé pour réguler la croissance de la biomasse bactérienne dans un système aqueux comprenant l'addition à, ou la mise en contact avec le système aqueux d'une quantité efficace d'un agent découplant tel qu'il est défini précédemment.

Dans un mode de réalisation préféré, la présente invention fournit un procédé pour réguler la croissance de la biomasse bactérienne dans un système aqueux, lequel procédé comprend la mise en contact d'une quantité efficace d'un agent découplant tel qu'il est défini précédemment, directement avec la biomasse bactérienne. Pour mettre en oeuvre ce procédé, il est recommandé de mettre en contact en un temps limité un volume maximal de boue activée avec l'agent découplant de manière à obtenir une efficacité optimale de celui-ci.

Ainsi, pour les essais de pilote biologique en laboratoire, le contact direct de l'agent découplant dans l'eau avec la biomasse bactérienne est désigné par l'expression « dosage instantané » ou « mélangeage instantané » appelé en langue anglaise flashmixing.

On a découvert que si l'agent découplant est simplement ajouté directement à un bioréacteur contenant des boues alors l'efficacité de l'agent est sensiblement diminuée puisque l'agent découplant est capable d'interagir avec les autres matières présentes dans le bioréacteur et que l'action du dérivé organophosphonium est sensiblement réduite.

Par ailleurs, la quantité efficace dudit dérivé organophosphonium peut représenter de 0,1 à 100 milligrammes par gramme de solides (exprimé en Matières Sèches ou MS) présents dans les boues dans le système aqueux, de préférence de 0,5 à 100 mg/g, par exemple, de 1 à 50 mg/g, telle que de 2 à 10 mg/g.

Les exemples suivants illustrent l'invention sans en limiter la portée.

### Exemple 1 :

### Etape a) synthèse d'une solution de trishydroxyméthyl phosphine :

Dans un réacteur parfaitement agité équipé pour distiller sous vide, préalablement inerté sous azote, on charge :
   Une solution titrant 80 % en THPC (tetrakis(hydromethyl)phosphonium chlorure) et contenant 150 g de THPC (0,63 mole) ;
   on refroidit le mélange à 5 - 15°C ;
   on coule une solution de 385 g de soude à 8 % en 3 h et en contrôlant la température à 5 -15°C ;
   on maintient en fin de coulée le mélange réactionnel à 10°C durant 12 heures ;
   le formaldéhyde formé est éliminé par distillation d'un mélange eau / formaldéhyde à une température de 15- 30°C et à une pression < 10 mbar ; 970 g d'éthanol sont ajoutés et on distille dans les mêmes conditions afin d'épuiser le formaldéhyde ;
   on observe la précipitation de NaCl et après distillation la masse réactionnelle est analysée :
      Analyses : 93,5 % de THP / 3 % THPO / 3,5 % THPC

### Exemple 2 :

### Etapes b) et c) : synthèse du phosphonium (formule (1) avec n=8, m = 0 ou 1)

Dans un réacteur parfaitement agité équipé pour distiller sous vide, préalablement inerté, on introduit la masse réactionnelle préparée à l'exemple 1.

En contrôlant la température à 45 - 55°C, on coule en 30 minutes 111,8 g de I-8 di-iodooctane.

Le milieu réactionnel est biphasique et la précipitation de sels est observée (Nal / NaCl)

Après 50 heures de maintien à 50°C, le milieu réactionnel est filtré et le produit obtenu est une solution limpide jaune pâle dont on extrait une masse de 665 g présentant l'analyse RMN (raisonnance magnétique nucléaire) suivante :
Analyses en RMN 31 P
   3 % THPO
   3% THP
   14 % THPC
   78 % de dérivés phosphoniums suivant une composition molaire
des di-phosphonium et tri-phosphonium suivante :

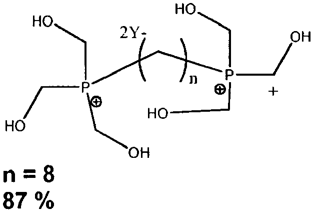

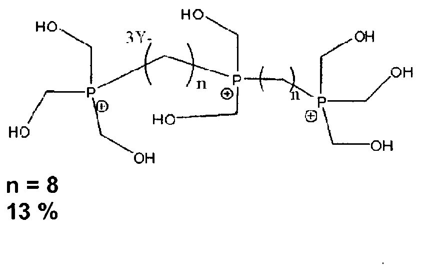

### Exemple 3 :

### Etape a) synthèse d'une solution de trishydroxyméthyl phosphine :

Dans un réacteur parfaitement agité équipé pour distiller sous vide, préalablement inerté sous azote, on charge une solution titrant 80 % en THPC. (tetrakis(hydromethyl)phosphonium chlorure) à 100 g de THPC (0,42 mole) et de l'eau : 50 g ;

On refroidit le mélange à 5 - 15°C ;

On coule la solution de soude NaOH 8 % / 228 g en 3 h et en contrôlant la température à 5 - 15°C ;

On maintient en fin de coulée à 10°C durant 12 heures ;

Le formaldéhyde formé est éliminé par distillation d'un mélange eau / formaldéhyde à une température de 15- 30°C et une pression inférieure à 10 mbar ;

786 g d'éthanol sont ajoutés et on distille le mélange réactionnel dans les mêmes conditions afin d'épuiser le formaldéhyde ;

On observe la précipitation de NaCl.

### Exemple 4 :

### Etapes b) et c) : synthèse du phosphonium (formule (1) avec n=6, m = 0 ou 1)

Dans un réacteur parfaitement agité équipé pour distiller sous vide, préalablement inerté, on introduit la masse réactionnelle préparée à l'exemple 3 en contrôlant la température à 45 - 55°C ;

On coule en 30 minutes 111,8 g de I-6 diodo hexane et on contrôle la température à 45 - 55°C ;

Le milieu réactionnel obtenu est biphasique et la précipitation de sels est observée (Nal / NaCl) ;

On maintient 30 heures la température du mélange réactionnel à 50°C avec une présence de 15 % de THPC ;

A une température de 10°C, on ajoute 30 g de NaOH à 8% ;

Mise en température à 40°C ;

### Coulée de 14,5 g de I-6 diodo hexane ;

Maintien du mélange réactionnel 12 heures à 50°C ;

Le mélange réactionnel est refroidi à 10°C, puis filtré sur fritté de porosité 3 ;

Le formaldéhyde formé est éliminé par distillation d'un mélange eau / formaldéhyde à une température 15- 30°C et à une pression < 10 mbar ; et 400 g d'éthanol sont ajoutés et distillés dans les mêmes conditions afin d'épuiser le formaldéhyde.

A une température de 10°C, on ajoute 15 g NaOH à 8% ;

Mise en température à 40% ;

On coule 10 g de 1-6 di-iodo hexane avec maintien du mélange réactionnel 12 heures à 50°C ;

Le mélange réactionnel est refroidi à 10°C puis filtré sur fritté de porosité 3 ;

Le formaldéhyde formé est éliminé par distillation d'un mélange eau/ formaldéhyde à une température 15- 30°C et à une pression < 10 mbar ; puis 350 g d'eau sont ajoutés et distillés dans les mêmes conditions afin d'épuiser le formaldéhyde ;

Le produit obtenu est une solution limpide jaune pâle d'où l'on soutire une masse de 327,7 g ;

La phase aqueuse soutirée est lavée par 3 lavages à l'acétate d'éthyle AcOEt (350 g)

La phase aqueuse lavée est désolvatée à l'évaporateur rotatif et

284 g d'une solution jaune pale sont obtenus présentant l'analyse de Résonance magnétique nucléaire suivante :
Analyses en RMN 31 P
   1,6 % THPO
   3 % THPC
   95 % de dérivés phosphoniums de composition :

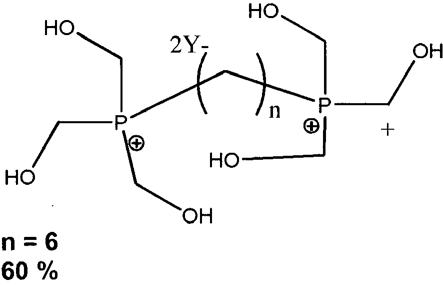

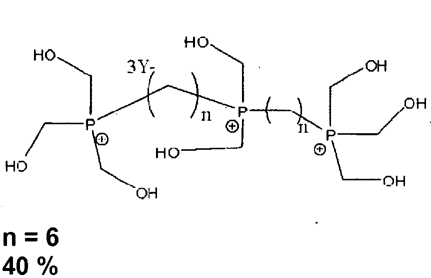

### Exemple 5:

### Mise en évidence de la réduction de boue activée par un dérivé organophosphonium en test de screening oxitop^{®} :

Pour évaluer la réduction de la production de boue par un agent chimique découplant en respirométrie (afin de mesurer la surconsommation d'oxygène, signature caractéristique des effets d'un agents découplant), on utilise la technique du test oxitop® contenant un milieu synthétique et des souches bactériennes particulièrement sensibles aux agents découplants. Ces souches bactériennes modèles (notamment la souche *Shinella granuli*) sont particulièrement représentatives des boues activées des STEP puisque isolées à partir de celle-ci dans les bassins d'aération.

La méthode et l'appareillage utilisés sont ceux décrits à l'exemple 3 de WO 2004/113236 cité comme référence. La souche *Shinella granuli* a été utilisée comme inoculum dans cette méthodologie (ce qui diffère de l'exemple 3 de WO 2004/113236 qui utilisait de la boue activée).

Les résultats obtenus en test de screening sont rassemblés dans le tableau 1 ci-dessous. Ils sont exprimés en pourcentage de découplage par rapport au témoin (ne comprenant pas d'agent découplant). Cela signifie que pour l'ex2 à 0.05 mg/l, nous avons une surconsommation d'oxygène de 18 % par rapport au témoin ne comprenant pas d'agent découplant. Le THPS (tetrakis(hydromethyl)phosphonium sulfate) produit des effets découplants dans les essais respirométrie oxitop® de 16 ± 8 % pour une concentration nominale de 3 ppm, l'intervalle de confiance à 95 % du THPS en terme de facteur de découplage étant de [10-22], valeurs calculées à partir des résultats obtenus dans 26 essais Oxitop®.

**Tableau 1**

| | Concentration en ppm | | | | | | | |
|---|---|---|---|---|---|---|---|---|
| Produit | 0,05 | 0,1 | 0,5 | 1 | 2 | 3 | 4 | 5 |
| Ex. 2 | 18% | 12%-16% | 15%-8%-14% | 15%-16%-15% | 10%-9% | - | - | - |
| THPS | | | | | | 16±8 % | | |

On observe sur les dérivés phosphonium synthétisés à l'exemple 2 une gamme de concentration assez étroite dans laquelle ces dérivés montrent une bonne efficacité.

Cette gamme de concentration montre souvent une activation de l'effet découplant aux faibles concentrations suivie d'une légère inhibition puis d'une toxicité obtenue vers 5 ppm (concentration nominale).

On observe des effets découplants du même ordre de grandeur que ceux obtenus avec le THPS (16 ± 8 %, valeur moyenne obtenue sur 26 essais Oxitop® avec 3 ppm de THPS). Le mélange de tri phosphonium et di phosphonium de l'exemple 2 donne des effets découplants répétables et significatifs sur la gamme de concentration relativement basse comprise entre 0.1 et 2 ppm. La concentration optimale semble se situer à 1 ppm avec des effets de l'ordre de 15 %.

### EXEMPLE 6

Mise en évidence de la réduction de boue activée par un dérivé organophosphonium en pilote biologique chemostat®

Des essais sur pilotes biologiques alimentés en continu par de l'effluent synthétique ont porté sur la molécule Ex2 (exemple 2 ci-dessus) montrent des effets découplants significatifs sur la réduction de production de boue. Les pilotes biologiques ont un volume de 5 litres et sont aérés en continu ; une purge de ceux-ci est pratiquée chaque jour (excepté le week-end) afin d'obtenir un âge de boue de 7 jours environ. Les pilotes biologiques ont été ensemencés par de la boue activée provenant de la STEP urbaine de St-Fons (France). Après une courte période d'acclimatation de la boue, le traitement par la molécule Ex2 a été réalisé selon la méthode du flash mixing également décrite dans l'exemple 1 de WO 2004/113236 cité comme référence.

Une expérimentation dont la période totale d'injection du produit découplant selon la méthode du flash mixing a duré 3 mois a donné les résultats suivants :

| Traitement | Réduction de production de boue | Taux de croissance (en g MLSS/g DCO éliminée) | Réduction du taux de croissance |
|---|---|---|---|
| Témoin (non traité) | / | 0.188 | / |
| THPS 2.9 ppm | 13.6% | 0.171 | 9.0% |
| Composé Ex2, 1.1 ppm | 14.9% | 0.182 | 3.2 % |
| Composé Ex2, 2.3 ppm | 20.2 % | 0.160 | 14.9% |

On observe une bonne efficacité du composé Ex2 sur la réduction de la production de boue, notamment à 2.3 ppm, avec une réduction légèrement supérieure à 20 % comparativement au témoin non traité.

Une expérimentation complémentaire utilisant cette-fois ci 2 grades différents du composé Ex2 de l'exemple 2 ci-dessus dénommés ci-après EX21 et EX22 a donné les résultats suivants sur une période d'injection de 1 mois :

| Traitement | Réduction de production de boue | Taux de croissance (en g MLSS/g DCO éliminée) | Réduction du taux de croissance |
|---|---|---|---|
| Témoin (non traité) | / | 0.174 | / |
| Composé Ex21, 2.3 ppm | 37.4% | 0.113 | 35.1 % |
| Composé Ex22, 2.3 ppm | 24.3% | 0.135 | 22.5% |
| Composé Ex22, 5.7 ppm | 27.6 % | 0.129 | 26.0% |

Le composé EX22 montre une bonne efficacité sur la réduction de la production de boue de 27.6 % et une réduction du taux de croissance de 26 % (ce qui confirme qu'à cette concentration, il n'altère pas la capacité épuratoire des boues).

## Revendications

1. Dérivé organophosphonium de formule générale moyenne (1) : 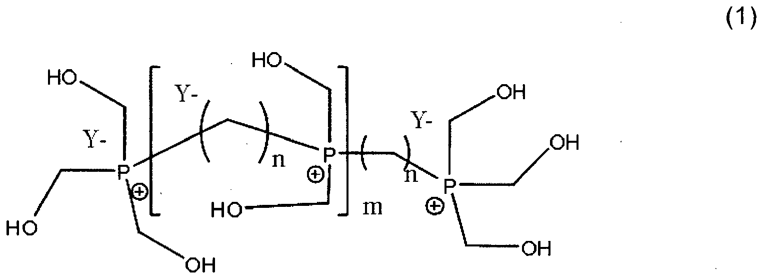 dans laquelle:
n est un nombre compris entre 4 et 20,
m est un nombre compris entre 0 et 10, et
Y est un anion.

2. Dérivé selon la revendication 1, **caractérisé en ce que** n est compris entre 5 et 10,
m est 0 ou 1, et
Y est un anion chlorure, sulfate, phosphate, ou bromure.

3. Dérivé selon la revendication 1 ou 2, **caractérisé en ce que** n est 8 et
m est 0 ou 1.

4. Procédé pour réguler la croissance de la biomasse bactérienne dans un système aqueux comprenant l'addition au système aqueux, ou la mise en contact avec le système aqueux, d'une quantité efficace d'un agent découplant choisi parmi un dérivé organophosphonium tel que défini à l'une quelconque des revendications 1 à 3.

5. Procédé selon la revendication 4, **caractérisé en ce que** la quantité efficace de l'agent découplant est comprise entre 0,001 et 100 mg/l.

6. Procédé selon la revendication 5, **caractérisé en ce que** la quantité efficace de l'agent découplant est comprise entre 0,005 et 50 mg/l.

7. Procédé selon la revendication 6, **caractérisé en ce que** la quantité efficace de l'agent découplant est comprise entre 0,01 mg/l à 30 mg/l.

8. Procédé selon la revendication 7, **caractérisé en ce que** la quantité efficace de l'agent découplant est comprise entre 0,1 mg/l à 10 mg/l.

9. Procédé selon la revendication 8, **caractérisé en ce que** la quantité efficace de l'agent découplant est comprise entre 0,5 mg/l à 7,5 mg/l.

10. Procédé selon la revendication 9, **caractérisé en ce que** la quantité efficace de l'agent découplant est comprise entre 1 mg/l à 5 mg/l.

11. Procédé selon la revendication 4, **caractérisé en ce que** la quantité efficace de l'agent découplant est comprise entre 0,1 mg à 100 mg par gramme de solides, exprimés en matière sèche, présents dans les boues dans le système aqueux.

12. Procédé selon la revendication 11, **caractérisé en ce que** la quantité efficace de l'agent découplant est comprise entre 1 mg à 50 mg par gramme de solides présents dans les boues dans le système aqueux.

13. Procédé selon la revendication 12, **caractérisé en ce que** la quantité efficace de l'agent découplant est comprise entre 2 mg à 10 mg par gramme de solides présents dans les boues dans le système aqueux.

14. Procédé selon l'une quelconque des revendications 4 à 13, **caractérisé en ce que** le système aqueux est une usine de traitement des eaux usées en vue du traitement des effluents industriels ou municipaux.

## Patentansprüche

1. Organophosphoniumderivat der allgemeinen mittleren Formel (1): 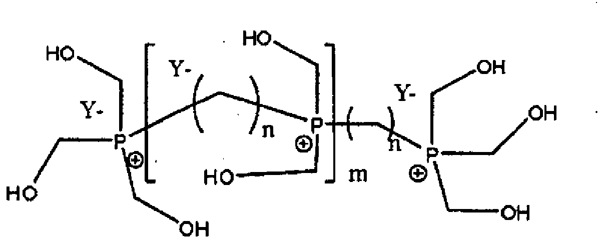 in der:
n eine Zahl zwischen 4 und 20 ist,
m eine Zahl zwischen 0 und 10 ist, und
Y ein Anion ist.

2. Derivat nach Anspruch 1, **dadurch gekennzeichnet, dass** n zwischen 5 und 10 liegt,
m 0 oder 1 ist, und
Y ein Chlorid-, Sulfat-, Phosphat- oder Bromitanion ist.

3. Derivat nach Anspruch 1 oder 2, **dadurch gekennzeichnet, dass** n 8 ist und m 0 oder 1 ist.

4. Verfahren zum Regeln des Wachstums der bakteriellen Biomasse in einem wässrigen System, das das Zusetzen zu dem wässrigen System oder das Inkontaktbringen mit dem wässrigen System einer wirksamen Menge eines Entkopplungsmittels umfasst, das ausgewählt ist aus einem Organophosphoniumderivat, wie es in einem beliebigen der Ansprüche 1 bis 3 definiert ist.

5. Verfahren nach Anspruch 4, **dadurch gekennzeichnet, dass** die wirksame Menge des Entkopplungsmittels zwischen 0,001 und 100 mg/l liegt.

6. Verfahren nach Anspruch 5, **dadurch gekennzeichnet, dass** die wirksame Menge des Entkopplungsmittels zwischen 0,005 und 50 mg/l liegt.

7. Verfahren nach Anspruch 6, **dadurch gekennzeichnet, dass** die wirksame Menge des Entkopplungsmittels zwischen 0,01 mg/l und 30 mg/l liegt.

8. Verfahren nach Anspruch 7, **dadurch gekennzeichnet, dass** die wirksame Menge des Entkopplungsmittels zwischen 0,1 mg/l und 10 mg/l liegt.

9. Verfahren nach Anspruch 8, **dadurch gekennzeichnet, dass** die wirksame Menge des Entkopplungsmittels zwischen 0,5 mg/l und 7,5 mg/l liegt.

10. Verfahren nach Anspruch 9, **dadurch gekennzeichnet, dass** die wirksame Menge des Entkopplungsmittels zwischen 1 mg/l und 5 mg/l liegt.

11. Verfahren nach Anspruch 4, **dadurch gekennzeichnet, dass** die wirksame Menge des Entkopplungsmittels zwischen 0,1 mg und 100 mg pro Gramm an Feststoffen liegt, ausgedrückt in Trockenmasse, die in den Schlämmen des wässrigen Systems enthalten sind.

12. Verfahren nach Anspruch 11, **dadurch gekennzeichnet, dass** die wirksame Menge des Entkopplungsmittels zwischen 1 mg und 50 mg pro Gramm an Feststoffen liegt, die in den Schlämmen des wässrigen Systems enthalten sind.

13. Verfahren nach Anspruch 12, **dadurch gekennzeichnet, dass** die wirksame Menge des Entkopplungsmittels zwischen 2 mg und 10 mg pro Gramm an Feststoffen liegt, die in den Schlämmen des wässrigen Systems enthalten sind.

14. Verfahren nach einem beliebigen der Ansprüche 4 bis 13, **dadurch gekennzeichnet, dass** das wässrige System eine Abwasserreinigungsanlage für die Behandlung von industriellen oder kommunalen Abwässern ist.

## Claims

1. An organophosphonium derivative of the average general formula (1): 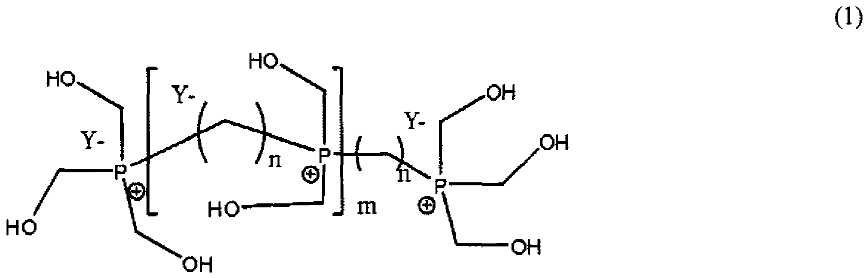 wherein:
n is a number comprised between 4 and 20,
m is a number comprised between 0 and 10, and
Y is an anion.

2. The derivative according to claim 1, **characterized in that** n is comprised between 5 and 10,
m is 0 or 1, and
Y is a chloride, sulfate, phosphate or bromide anion.

3. The derivative according to claim 1 or 2, **characterized in that** n is 8 and m is 0 or 1.

4. A method for controlling the growth of bacterial biomass in an aqueous system comprising adding to the aqueous system or contacting with the aqueous system, an effective amount of an uncoupling agent selected from an organophosphonium derivative as defined in any one of claims 1 to 3.

5. The method according to claim 4, **characterized in that** the effective amount of the uncoupling agent is comprised between 0.001 and 100 mg/l.

6. The method according to claim 5, **characterized in that** the effective amount of the uncoupling agent is comprised between 0.005 and 50 mg/l.

7. The method according to claim 6, **characterized in that** the effective amount of the uncoupling agent is comprised between 0.01 mg/l to 30 mg/l.

8. The method according to claim 7, **characterized in that** the effective amount of the uncoupling agent is comprised between 0.1 mg/l to 10 mg/l.

9. The method according to claim 8, **characterized in that** the effective amount of the uncoupling agent is comprised between 0.5 mg/l to 7.5 mg/l.

10. The method according to claim 9 **characterized in that** the effective amount of the uncoupling agent is comprised between 1 mg/l to 5 mg/l.

11. The method according to claim 4, **characterized in that** the effective amount of the uncoupling agent is comprised between 0.1 mg to 100 mg per gram of solids, expressed as dry material, present in the sludges in the aqueous system.

12. The method according to claim 11, **characterized in that** the effective amount of the uncoupling agent is comprised between 1 mg to 50 mg per gram of solids present in the sludges in the aqueous system.

13. The method according to claim 12, **characterized in that** the effective amount of the uncoupling agent is comprised between 2 mg to 10 mg per gram of solids present in the sludges in the aqueous system.

14. The method according to any one of claims 4 to 13, **characterized in that** the aqueous system is a waste water treatment plant with view to treating industrial or municipal effluents.
